# EUROPEAN PATENT SPECIFICATION

(11) **EP 2 605 307 B1**
(45) Date of publication and mention of the grant of the patent: **30.03.2016**
(21) Application number: 11192989.9
(22) Date of filing: 12.12.2011
(51) Int. Cl.: H01M 10/625, H01M 2/10, B60L 11/18, H01M 10/63, H01M 10/6563, H01M 10/613

(54) **System for extracting air from a battery compartment of an industrial vehicle**
System zur Extraktion von Luft aus einem Batteriefach eines Nutzfahrzeugs
Système d'extraction d'air d'un compartiment de batterie d'un véhicule industriel

(43) Date of publication of application: 19.06.2013
(73) Proprietor: IVECO S.p.A., 10156 Torino (IT)
(72) Inventor: Bertozzi, Franco, 10040 Druento (IT)
(74) Representative: Franzolin, Luigi

(56) References cited:
- JP-A- 60 172 179
- JP-A- 62 139 277
- US-A1- 2007 144 804
- US-A1- 2011 147 104
- US-A1- 2011 183 599

## Description

### Application field of the invention

The present invention refers to a system for extracting air from a battery compartment of an industrial vehicle. And, in general, of those vehicle whose battery compartment is directly exposed to sun radiation.

### Description of the prior art

The battery compartment of industrial vehicles is generally arranged laterally, fixed to the vehicle frame and projecting from it.

Such position have always been considered as very advantageous, because it improves the accessibility of the compartment itself.

On the one hand, indeed, it is necessary to reach the compartment in order to check the conditions of the battery, of the battery connections and of the compartment itself, which may often be attacked by the acid fumes of the batteries themselves.

On the other hand, it is important to point out that batteries are particularly heavy, and that an easily accessible compartment facilitates the replacement of the batteries themselves.

Such compartments usually appear as boxes substantially shaped as a closed parallelepiped, made of metal, plastic or mixed material.

They have a metal or plastic lid which closes the upper part of the battery compartment, in order to protect batteries from accidental short circuits or from water, dust of other external agents.

Changing the air in the battery compartment is always critical, since the exposition to the sun or to external sources of heat, such as for example the components of the exhaust system or of other vehicle circuits, determines the increase of the internal temperature of the compartment and consequently of the batteries it contains. No specially made openings are provided for improving the ventilation of the battery compartment, but the accidental presence of openings may occur because they are made for other purposes: for fixing the compartment itself to the vehicle frame or for the passage of electric cables.

For this reason, high temperatures are generated, especially during vehicle stops, which cause a premature deterioration of the batteries which they do not tolerate well.

The quantity of heat that is transmitted to the batteries depends on various factors such as compartment dimensions, battery dimensions and capacity, also in relation to the dimensions of the compartment and to the quantity of electrolyte contained in the batteries.

These factors determine heating cycles which deteriorate functionality and life of the batteries.

Such problem is particularly relevant for new vehicles that are parked for days or for weeks under direct sun radiation, before they are prepared and delivered.

Systems to dissipate heat from a battery are known in industries that are different from that of industrial or commercial vehicles. In particular, US-A1-2011183599 discloses an uninterruptable power supply enclosure and a battery locker having a top solar panel to power a fan for air circulation throughout the enclosure. In particular such system is used in the telecommunication industry.

### Summary of invention

Therefore the aim of the present invention is to overcome all the aforementioned drawbacks and to provide an industrial or commercial vehicle which limits the overheating of the batteries. The object of the present invention is an industrial or commercial vehicle, according to claim 1.

A further aim of the present invention is to provide an industrial or commercial vehicle comprising a self power supplied battery compartment able to keep an internal optimal temperature in order to save the efficiency of the batteries it contains. The present invention will be described more fully in the claims, that are an integral part of the present invention.

### Brief description of Figures

Further purposes and advantages of the present invention will become clear from the following detailed description of a preferred embodiment (and its alternative embodiments) and the drawings that are attached hereto, which are merely illustrative and non-limitative, in which:
- figure 1 shows a perspective view of a device according to the present invention,
- figure 2 shows a lateral view of the device of figure 1;
- figure 3 shows a view according to figure 1 with removed parts;
- figure 4 shows a view from the inside of a part of the device;
- figure 5 shows a circuit diagram exemplifying the functioning of the device according to the previous figures.

In the figures the same reference numbers and letters identify the same elements or components.

### Detailed description of preferred embodiments of invention

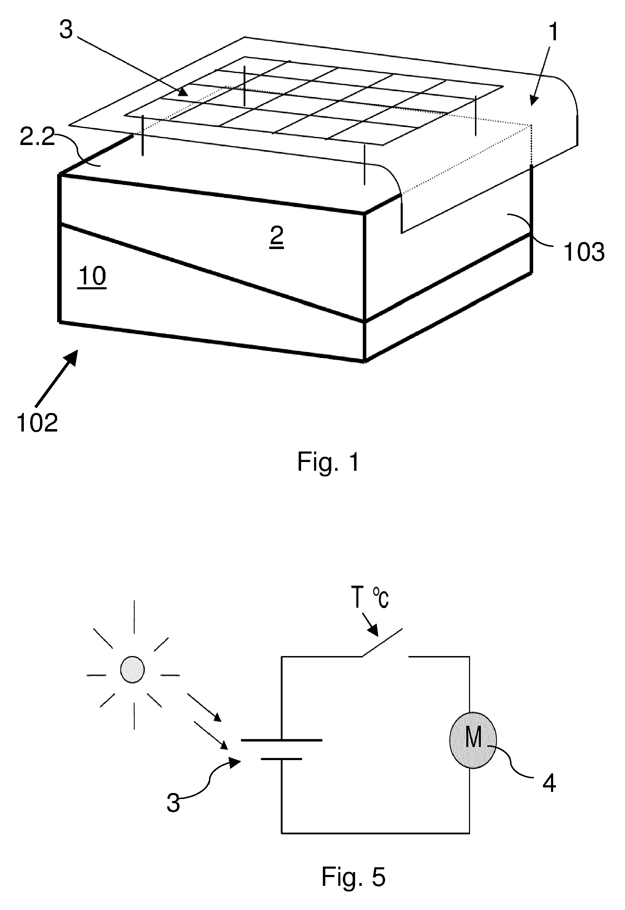

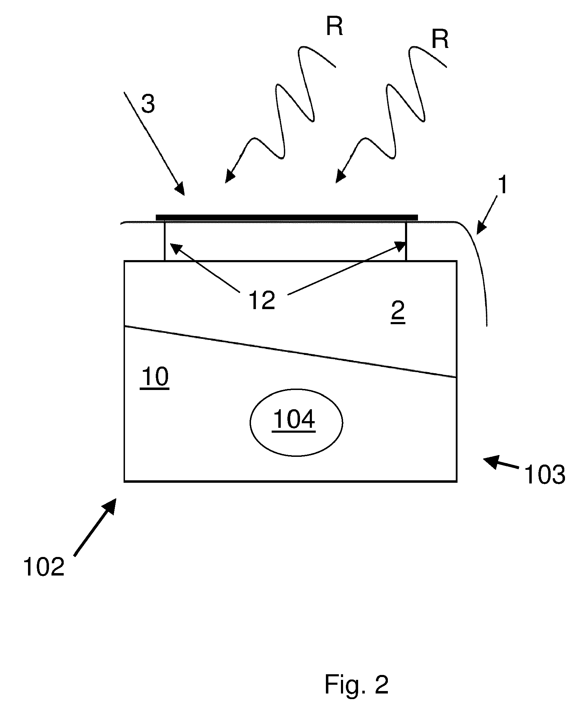

With reference to figures 1 and 2, the device according to the present invention comprises a lid 2 suitable to upperly close a housing 10, according to a reciprocally complementary coupling, defining a battery compartment 102. Such lid 2 is equipped with a system for air suction/extraction from the inside of the battery compartment 102.

Such suction/extraction system is integrated in the lid 2 and essentially comprises
- an electric fan 4 associated to the lid 2,
- the lid 2 comprises a through opening (not shown) which allows the electric fan 4 to suck/extract air from the inside of the compartment 102 and to disperse it in the external environment of the battery compartment,
- a protection 1 is fixed to cover, at least partially, the lid 2, in order to screen it from the sun radiation R, as shown in figure 2,
- a photovoltaic generator 3 fixed on such protection 1 or defining such protection 1 is electrically connected to the electric fan 4 in order to feed it, see scheme in figure 5,
- a thermostat T is arranged inside the compartment 102 in order to activate the electric fan 4 when the internal temperature exceeds a predetermined threshold.

According to a preferred alternative embodiment of the device according to the present invention, the battery compartment 102 is substantially parallelepiped-shaped. Moreover, the protection 1 is fixed to the lid by means of spacers 12, in order to allow the circulation of air between the lid 2 and the protective screen 1.

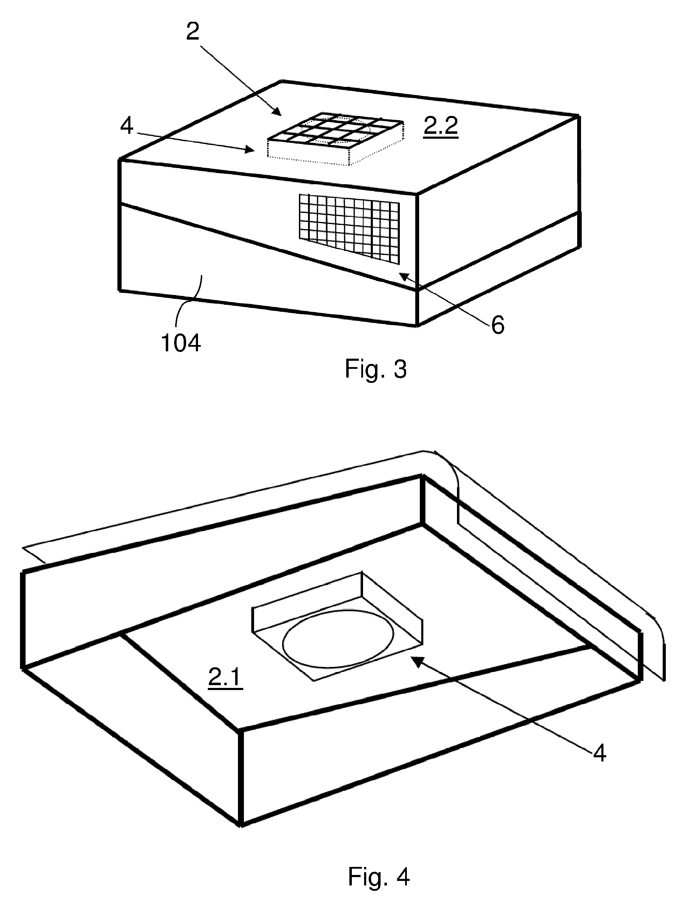

The electric fan 4 is preferably fixed to the lid 2 in a position in the middle of it. The electric fan 4 may be fully contained in the compartment 102. In such case, as shown in figure 4, it is fixed to the face 2.1 of the lid 2 intended to be turned towards the compartment 10.

Figure 3 shows the electric fan 4 associated to the lid 2 in correspondence of its external face 2.2.

According to another alternative embodiment, the electric fan 4 comprises a portion projecting with respect to the face 2.1 and another portion projecting with respect to the face 2.2. Preferably the lid has a flat portion to which said faces 2.1 and 2.2, which are opposed, belong, said flat portion also defining, at least partially, one of the faces of the parallelepipedal compartment.

With particular reference to figures 1 and 2, it can be noted that the covering 1 is folded in order to cover both the external face of the lid 2.2 and a side 103 of the compartment, adjacent to the face 2.2.

According to what is shown in the figures, also a portion of said compartment 103 is partially defined by the lid 2.

Figure 3 shows a through opening 6 arranged on a side 104 adjacent to the lid 2. Also in this case, a portion of said side 104 is defined by the lid 2, thus the through opening 6 may advantageously be realized on the portion of the side 104 defined by the lid 2, so that the whole suction system is integrated in the lid. This through hole 6 constitutes a ventilation opening for the compartment 102, namely it allows the introduction of air in the compartment in order to compensate the air sucked by the electric fan 4.

Such through opening 6 may be made also in the portion of the side 103 defined by the lid, so that, advantageously, such through opening 6 is concealed by the protection 1.

Both the ventilation opening 6 and the electric fan itself 4 may be equipped with protection grilles in order to avoid that insects or animals enter the battery compartment. According to another alternative embodiment, the opening 6 is not present because it is unnecessary, since pre-existing openings in the compartment ensure the correct ventilation of the compartment 102.

With reference to the electric diagram of figure 5, when the temperature measured by the thermostat T exceeds a predetermined threshold, it closes the circuit made by the electric connection of the photovoltaic generator 3 and of the electric fan 4 which is activated by the suction of the air in the compartment 102.

If the thermostat T is not present, the electric fan 4 operates until the generator 3 is able to power supply it.

Being the covering 1 superimposed to the outlet of the electric fan, the functioning of the electric fan tends to reduce also the temperature of the photovoltaic generator 3 which improves its efficiency.

Moreover, advantageously, the arrangement of the covering 1 on the lid 2 protects the compartment itself from the direct radiation R and mechanically protects the electric fan 4. Advantageously, according to the alternative embodiment wherein the whole air extraction system is integrated in the lid, it is evident that such lid may replace without modifications a pre-existing lid, both as an optional device that can be used at the discretion of the vehicle driver, and as a device to be used before the delivery and selling of the vehicle.

Advantageously, such lid is electrically autonomous, at least until it is directly exposed to the sun radiation. If it is necessary for the device to operate also when it is not directly exposed to the sun radiation, thin-film solar cells may be used, which ensure a good yield, also when exposed to diffused sun radiation.

It will be apparent to the person skilled in the art that other alternative and equivalent embodiments of the invention can be conceived and reduced to practice without departing from the scope of the invention as defined in the appended claims.

From the description set forth above it will be possible for the person skilled in the art to embody the invention with no need of describing further construction details.

## Claims

1. Industrial or commercial vehicle comprising a hollow housing (10) of at least one battery and a system for extracting air from a battery compartment (102), said system comprising a lid (2) suitable to upperly close said housing (10) according to a reciprocally complementary coupling thus defining the battery compartment (102); the lid (2) comprising:
- a first through opening and an electric fan (4) associated to the lid (2) in correspondence of said first through opening; wherein said system further comprises:
- a protection (1) fixed to cover at least partially the lid (2), in order to screen it at least partially from the sun radiation (R),
- a photovoltaic generator (3) fixed on said protection (1) or defining the protection (1) and electrically connected to the electric fan (4) to supply power to it.

2. Vehicle according to claim 1, wherein said protection (1) is spaced from the lid (2) by means of spacers (12).

3. Vehicle according to one of the previous claims, wherein said protection (1) covers at least partially said first through opening in order to mechanically protect the electric fan (4).

4. Vehicle according to one of the previous claims, wherein said protection (1) is folded in order to cover both the external face (2.2) of the lid (2) and another side (103) of the compartment (102) on which the lid is suitable to engage, adjacent to said lid (2).

5. Vehicle according to claim 4, wherein said lid (2) defines at least partially said other (103) or further side (104) of the battery compartment (102).

6. Vehicle according to claim 5, wherein said lid (2) comprises a second through opening (6) for ventilation.

7. Vehicle according to one of the previous claims, wherein, when the lid (2) is associated to a housing (10), the compartment thus realized is a parallelepiped.

8. Vehicle according to one of the previous claims wherein said system further comprises a thermostat (T), arranged in order to measure the internal temperature of the compartment (102) defined by the lid (2), suitable to activate the electric fan (4) when a measured temperature exceeds a predetermined threshold value.

9. Vehicle according to any of the previous claims, **characterized by** comprising a battery compartment (102) having the hollow housing (10) and the lid (2).

10. Vehicle according to claim 8, **characterized in that** the battery compartment (102) comprises a ventilation opening.

## Patentansprüche

1. Industrie- oder Nutzfahrzeug, umfassend ein hohles Gehäuse (10) zumindest einer Batterie und ein System zum Entziehen von Luft aus einem Batteriefach (102), welches System einen Deckel (2) umfasst, der dazu geeignet ist, das Gehäuse (10) oberseitig entsprechend einer wechselseitig komplementären Kupplung zu schließen, so dass das Batteriefach (102) begrenzt wird, welcher Deckel (2) umfasst:
- eine erste Durchgangsöffnung und ein elektrisches Gebläse (4), das dem Deckel (2) entsprechend der ersten Durchgangsöffnung zugeordnet ist; welches System ferner umfasst:
- einen Schutz (1), der zur zumindest teilweisen Abdeckung des Deckels (2) befestigt ist, um diesen zumindest teilweise vor Sonneneinstrahlung (R) zu schützen,
- einen photovoltaischen Generator (3), der auf dem Schutz (1) befestigt ist oder den Schutz (1) festlegt und elektrisch mit dem elektrischen Gebläse (4) zur Stromversorgung desselben verbunden ist.

2. Fahrzeug gemäß Anspruch 1, bei welchem der Schutz (1) von dem Deckel (2) durch Abstandshalter (12) beabstandet ist.

3. Fahrzeug gemäß einem der vorhergehenden Ansprüche, bei welchem der Schutz (1) die erste Durchgangsöffnung zumindest teilweise abdeckt, um das elektrische Gebläse (4) mechanisch zu schützen.

4. Fahrzeug gemäß einem der vorhergehenden Ansprüche, bei welchem der Schutz (1) gefaltet ist, um sowohl die Außenseite (2.2) des Deckels (2) und eine weitere Seite (103) des Fachs (102) benachbart zu dem Deckel (2) abzudecken, auf der der Deckel eingreifen kann.

5. Fahrzeug gemäß Anspruch 4, bei welchem der Deckel (2) zumindest teilweise die andere (103) oder weitere Seite (104) des Batteriefachs (102) festlegt.

6. Fahrzeug gemäß Anspruch 5, bei welchem der Deckel (2) eine zweite Durchgangsöffnung (6) zur Ventilation umfasst.

7. Fahrzeug gemäß einem der vorhergehenden Ansprüche, bei welchem dann, wenn der Deckel (2) einem Gehäuse (10) zugeordnet ist, das so gebildete Fach ein Parallelepiped ist.

8. Fahrzeug gemäß einem der vorhergehenden Ansprüche, bei welchem das System ferner einen Thermostat (T) umfasst, der zur Messung der inneren Temperatur des Fachs (102) angeordnet ist, das durch den Deckel (2) begrenzt wird, und der geeignet ist zur Aktivierung des elektrischen Gebläses (4), wenn eine gemessene Temperatur einen bestimmten Schwellwert überschreitet.

9. Fahrzeug gemäß einem der vorhergehenden Ansprüche, **dadurch gekennzeichnet, dass** es ein Batteriefach (102) mit dem hohlen Gehäuse (10) und dem Deckel (2) umfasst.

10. Fahrzeug gemäß Anspruch 8, **dadurch gekennzeichnet, dass** das Batteriefach (102) eine Belüftungsöffnung umfasst.

## Revendications

1. Véhicule industriel ou commercial comprenant un logement creux (10) d'au moins une batterie et un système pour extraire de l'air à partir d'un compartiment de batterie (102), ledit système comprenant un couvercle (2) approprié pour fermer, par le haut, ledit logement (10) selon un accouplement réciproquement complémentaire définissant ainsi le compartiment de batterie (102) ; le couvercle (2) comprenant :
- une première ouverture débouchante et un ventilateur électrique (4) associés au couvercle (2) en correspondance de ladite première ouverture débouchante ; dans lequel ledit système comprend en outre :
- une protection (1) fixée pour couvrir au moins partiellement le couvercle (2), afin de le protéger au moins partiellement du rayonnement solaire (R),
- un générateur photovoltaïque (3) fixé sur ladite protection (1) ou définissant la protection (1) et électriquement connecté au ventilateur électrique (4) pour lui fournir de l'énergie électrique.

2. Véhicule selon la revendication 1, dans lequel ladite protection (1) est espacée du couvercle (2) au moyen d'entretoises (12).

3. Véhicule selon l'une des revendications précédentes, dans lequel ladite protection (1) couvre au moins partiellement ladite première ouverture débouchante afin de protéger mécaniquement le ventilateur électrique (4).

4. Véhicule selon l'une des revendications précédentes, dans lequel ladite protection (1) est pliée afin de couvrir à la fois la face externe (2.2) du couvercle (2) et un autre côté (103) du compartiment (102) sur lequel le couvercle est approprié pour entrer en prise, adjacent audit couvercle (2).

5. Véhicule selon la revendication 4, dans lequel ledit couvercle (2) définit au moins partiellement ledit autre côté (103) ou côté supplémentaire (104) du compartiment de batterie (102).

6. Véhicule selon la revendication 5, dans lequel ledit couvercle (2) comprend une seconde ouverture débouchante (6) pour ventilation.

7. Véhicule selon l'une des revendications précédentes, dans lequel, lorsque le couvercle (2) est associé à un logement (10), le compartiment ainsi réalisé est un parallélépipède.

8. Véhicule selon l'une des revendications précédentes, dans lequel ledit système comprend en outre un thermostat (T), agencé afin de mesurer la température interne du compartiment (102) défini par le couvercle (2), approprié pour activer le ventilateur électrique (4) lorsqu'une température mesurée dépasse une valeur de seuil prédéterminée.

9. Véhicule selon l'une quelconque des revendications précédentes, **caractérisé en ce qu'**il comprend un compartiment de batterie (102) comportant le logement creux (10) et le couvercle (2).

10. Véhicule selon la revendication 8, **caractérisé en ce que** le compartiment de batterie (102) comprend une ouverture de ventilation.
